## Europäisches Patentamt
## European Patent Office
## Office européen des brevets

(19)

(11) Veröffentlichungsnummer: **0 097 192**
**B1**

(12)

# EUROPÄISCHE PATENTSCHRIFT

(45) Veröffentlichungstag der Patentschrift:
02.09.87

(21) Anmeldenummer: **83900033.8**

(22) Anmeldetag: **21.12.82**

(86) Internationale Anmeldenummer:
**PCT/EP 82/00272**

(87) Internationale Veröffentlichungsnummer:
**WO 83/02317 (07.07.83 Gazette 83/16)**

(51) Int. Cl.⁴: **F 41 G 5/20**, B 64 G 1/00,
H 04 L 11/16

(54) **KAMPFSCHIFF MIT FUNKTIONSEINHEITSANLAGEN.**

(30) Priorität: **22.12.81 DE 3150894**

(43) Veröffentlichungstag der Anmeldung:
**04.01.84 Patentblatt 84/1**

(45) Bekanntmachung des Hinweises auf die Patenterteilung:
**02.09.87 Patentblatt 87/36**

(84) Benannte Vertragsstaaten:
**BE FR IT NL SE**

(56) Entgegenhaltungen:
DE-C-2 056 069
US-A-3 080 514
US-A-3 732 543

Computer Design, Vol. 19, No. 10, October 1980,
(Concord, Massachussetss US) R. MAURIELLO: "A
distributed processing system for military
applications-Part 2: The serial data bus", lines 14-36
Electrical Communication, Vol. 55, No. 4, 1980,
(Heidenheim, DE) F. Pandozy "Shipboard optical
fiber data multiplex system", lines 304-311
Revue Internationale de Défense, Vol. 10, No. 6,
December 1977, (Interavia Genève) L.M.
Cunningham "Le système conduite de tir Sea-
Archer"
IEEE Transactions on Computers, Vol. C-29, No. 5
May 1980, (New-York US) H. Jafari et al.:
"Simulation of a class of Ring-structured

(73) Patentinhaber: **BLOHM + VOSS AG, Hermann-
Blohm Strasse 3, D-2000 Hamburg 11 (DE)**

(72) Erfinder: **SADLER, Karl- Otto, Kroneweg 21, D-2000
Hamburg 72 (DE)**
Erfinder: **SCHMIDT, Willy, Heideweg 13, D-2081
Ellerbek (DE)**

(74) Vertreter: **Dipl.- Phys.Dr. Manitz Dipl.- Ing., Dipl.-
Wirtsch. Finsterwald Dipl.- Chem.Dr. Heyn Dipl.-
Phys. Rotermund Morgan, B.Sc.(Phys.), Robert-
Koch- Strasse 1, D-8000 München 22 (DE)**

(56) Entgegenhaltungen: (Fortsetzung)
**networks" lines 385-391**

## Beschreibung

Die Erfindung betrifft ein Kampfschiff nach dem Oberbegriff des Patentanspruchs 1.

Bei einem bekannten Kampfschiff dieser Art (DE-PS 20 56 069) können zwar die einzelnen Funktionseinheiten parallel zum Bau des Schiffskörpers in dafür besonders geeigneten Werkstätten hergestellt werden, um dann nach Fertigstellung einfach in die vorbereiteten Einheitsfundamente eingesetzt und dort befestigt zu werden. Es müssen jedoch, um den erforderlichen Datenaustausch zwischen den Funktionseinheiten und der zentralen Befehlsstellenanlage zu gewährleisten, sehr viele Informationsübertragungsleitungen innerhalb des Schiffskörpers verlegt werden. Es kann beispielsweise vorkommen, daß in einem Kampfschiff ca. 200 km Datenkabel verlegt werden müssen, um sämtliche Informationsübertragungen zwischen den Funktionseinheiten und der Befehlsstellenanlage vornehmen zu können. Hierzu müssen Kabelbahnen gebaut und die Kabel verlegt, gehaltert, an den Schotten vergossen und mit Steckern versehen werden. Dies bedeutet nicht nur einen erheblichen Arbeitsaufwand, sondern bedingt auch eine beachtliche Zunahme des Schiffsgewichtes. Weiter ist es nachteilig, daß beim Ersetzen von beispielsweise veralteten Funktionseinheiten durch modernisierte oder ganz anders gestaltete die Verkabelung weitgehend neu durchgeführt werden muß. Hierfür ist ein erheblicher Aufwand erforderlich, zumal bestimmte Funktionseinheiten bis zu 40 Stecker, mit jeweils bis zu 40 Stiften benötigen, um den erforderlichen Informationsaustausch zu anderen Funktionseinheiten oder zur Befehlsstellenanlage vornehmen zu können.

Um den Aufwand für die Verkabelung und insbesondere deren Gewicht herabzusetzen, hat man an Bord eines Schiffes auch schon ein Datenmultiplex-System unter Verwendung von Lichtleitfasern verwendet (Electrical Communication, Band 55, No. 4, 1980, Heidenheim, DE; F. Pandozy: "Shipboard Optical Fiber Data Multiplex System", Seiten 304 - 311), bei dem in den Schiffskörper Leitungen in Form eines aus Glasfasern mit dazwischen eingesetzten Schalteinheiten bestehenden Ringes eingebaut sind. Die als fester Bestandteil des im Schiff installierten Leitungsnetzes anzusehenden Schalteinheiten weisen Übertragungsmodule, Signalgebungsmodule, Verteilungsmodule, Prozeßmodule sowie Multiplexer und Demultiplexer auf, die ggfs. über eine Signalkonditioniervorrichtung an die eigentlich miteinander zu verbindenden Quellen bzw. Verbraucher angeschlossen sind. Mittels der Schalteinheiten können die von den Quellen kommenden bzw. zu den Verbraucher gelangenden Daten so geordnet und geformt werden, daß sie über das Glasfasernetz übertragen werden können. Die bei dem bekannten System verwendeten Schalteinheiten sind einander ähnlich, müssen jedoch an die verwendeten Quellen und Verbraucher durch geeignete Interface-Kreise angepaßt werden. Durch Anwendung dieses bekannten Datenmultiplex-Systems bei den vorbekannten Funktionseinheiten würde zwar das Gewicht für die Verkabelung wegen der Benutzung von Glasfasern herabgesetzt, doch verringert sich weder die Zahl der zu übertragenden Daten noch können die im Schiff angeordneten Schalteinheiten auch beim Austauschen von Funktionseinheiten ohne weiteres weiterverwendet werden. Das schiffsfeste Leitungssystem mit Elektronik bleibt also in Abstimmung auf die speziell verwendeten Quellen und Verbraucher individualisiert. Das ist bei Kampfschiffen besonders dann nachteilig, wenn - wie das heute vielfach üblich ist - in ein und demselben Schiffskörper Funktionseinheiten verschiedener Herkunft, die nach z. T. ganz unterschiedlichen elektronischen Prinzipien aufgebaut sind und arbeiten, eingebaut werden müssen, denn dadurch ist eine erhebliche Individualisierung der in das Schiff eingebauten Schalteinheiten erforderlich, was auch beim späteren Austausch durch eventuell ganz anders konzipierte Funktionseinheiten beträchtliche Umbauarbeiten im Schiffskörper erforderlich macht. Ein weiterer Nachteil besteht darin, daß in den Schiffskörper außer dem Leitungsnetz eine Fülle von darin integrierter Elektronik eingebaut werden muß, wozu Fachleute herangezogen werden müssen, die auf einer Werft normalerweise nicht zur Verfügung stehen. Die gleichen Nachteile weist auch ein vorbekanntes Prozeßsystem für militärische Anwendungen auf (Computer-Design, Band 19, 1980, No. 10, Concord, Massachusetts/USA), bei dem eine zentrale Befehlsstelle und ein Steuerbus mit 6 Waffen-Subsystem-Bussen kommuniziert, wobei ebenfalls mit Elektronik bestückte Knoten zwischen den Datenleitungen im Schiffskörper angeordnet sind.

Die Aufgabe der Erfindung besteht darin, ein Kampfschiff der eingangs genannten Gattung zu schaffen, bei dem die mechanische Standardisierung durch eine elektronische Standardisierung ergänzt wird, welche nicht nur den Aufwand für die Verkabelung zwischen den Funktionseinheiten erheblich herabsetzt, sondern darüberhinaus beim Ersetzen bestimmter Funktionseinheiten durch geänderte Funktionseinheiten und unabhängig vom Aufbau und der Funktion der in die Funktionseinheiten eingebauten Anlagen Veränderungen bei den den Datenaustausch innerhalb des Schiffskörpers gewährleistenden Mitteln entbehrlich macht.

Zur Lösung dieser Aufgabe sind die Merkmale des kennzeichnenden Teils des Patentanspruchs 1 vorgesehen.

Weil die für den Betrieb der betreffenden Funktionseinheit spezifischen Daten in dem in jeder Funktionseinheit vorgesehenen Datenverarbeitungsgerät abgelegt sind, wird der Datenaustausch zwischen den verschiedenen Funktionseinheiten auf ein Minimum herabgesetzt, so daß auch die Anforderungen an die Datenverarbeitunggeräte und die Übertragungsleitung entsprechend geringer sind. Dadurch, daß die Datenverarbeitungsgeräte in den Funktionseinheiten untergebracht sind, kann die durch die in den Funktionseinheiten angeordneten, sehr unterschiedlichen Anlagen erforderliche Individualisierung vollständig in die Funktionseinheiten verlegt werden, während aufgrund der von den Datenverarbeitungsgeräten vorgenommenen Datenanpassung im Schiffskörper lediglich einheitliche Datenleitungen vorgesehen sind, die ohne jede Veränderung für die Verbindung ganz unterschiedlich konzipierte Anlagen enthaltender Funktionseinheiten geeignet sind und somit auch beim Ersetzen bestimmter Funktionseinheiten durch geänderte Funktionseinheiten unverändert weiterverwendet werden können. Es braucht auch am Aufbau der in den einzelnen Anlagen der Funktionseinheiten eingebauten Elektronik nichts verändert zu werden, weil die in die Funktionseinheiten eingebauten Datenverarbeitungsgeräte die erforderliche Anpassung an die Informationsübertragungsleitungen vornehmen. Nach dem Einsetzen der im allgemeinen außerhalb der Schiffswerft in Spezialwerkstätten gefertigten Funktionseinheiten in den parallel dazu auf der Schiffswerft vorgefertigten Schiffskörper müssen lediglich die Einheitsplattformen mit den Einheitsfundamenten mechanisch verbunden und die vorgesehenen Steckerverbindungen zwischen den an den Einheitsfundamenten mündenden Datenleitungen und den Funktionseinheiten hergestellt werden, um das Kampfschiff mit den darin angeordneten Funktionseinheiten voll funktionsfähig zu machen.

Ein besonderer Vorteil der Erfindung besteht darin, daß die heutzutage noch weitgehend analog arbeitenden Anlagen auf Schiffen durch in die Datenverarbeitungsgeräte eingebaute Analog-Digital-Wandler ohne weiteres an die erfindungsgemäß vorgesehenen einheitlichen Datenleitungen angeschlossen werden können.

Das für jede in einer Funktionseinheit vorgesehene Anlage standardisierte Datenverarbeitungsgerät verfügt über alle gebräuchlichen Anpassungen für den Informationsaustausch mit der Anlage und über ein normiertes Verfahren für den Austausch von Informationen zwischen verschiedenen Anlagen. Durch die Möglichkeit der Verwendung von Programmen zur Fehlersuche, Ausbildung, Systemabstimmung und Simulation innerhalb der einzelnen Datenverarbeitungsgeräte lassen sich diese personal- und zeitintensiven Tätigkeiten sinnvoll unterstützen und schneller durchführen. Mittels der Simulationsprogramme können innerhalb der Datenverarbeitungsgeräte der einzelnen Anlage alle benötigten externen Informationen erzeugt werden. Auf diese Weise können Funktionstests der Anlage durchgeführt werden, ohne daß die z. B. erst später in das Schiff eingebauten anderen Funktionseinheiten und Anlagen bereits zur Verfügung stehen.

Der Austausch von Anlagen und Funktionseinheiten, beispielsweise von Waffen- oder Feuerleitanlagen zum Zwecke einer Umrüstung oder späteren Modernisierung ist unter Benutzung des gleichen einheitlichen Datenleitungs-Systems ohne weiteres möglich. Es ist lediglich erforderlich, die einzelnen Datenverarbeitungsgeräte innerhalb der einzelnen Funktionseinheiten und Anlagen entsprechend aufzubauen.

Die Datenverarbeitungsgeräte der einzelnen Funktionseinheiten und Anlagen werden durch eine Informations-, Rechen- und Speichereinheit gebildet, welche modular aufgebaut sind. Die Module enthalten Rechnereinheiten, Speichereinheiten, Stromversorgungen und Interface-Module zur Prozeßsteuerung und zum Verknüpfen der Anlagen untereinander.

Das Informationsnetz arbeitet autonom. Es gibt keine Datenverarbeitungsgeräte, die gegenüber anderen Datenverarbeitungsgeräten übergeordnete Steuerfunktionen ausüben.

Die Erfindung schafft somit für die in der DE-AS 20 56 069 beschriebene mechanische Standard-Schnittstelle zwischen Funktionseinheit und Schiff eine Standard-Schnittstelle für die Elektronik, indem ein in der Funktionseinheit angeordnetes individuelles Datenverarbeitungsgerät an das universelle Datenleitungs-System angeschlossen wird.

Die durch die Erfindung bewirkte Dezentralisierung der Datenverarbeitungsgeräte hat weiter den Vorteil, daß bei Zerstörung der Operationszentrale im Kampf die einzelnen Funktionseinheiten in beschränktem Umfang noch funktionsfähig bleiben. Zu diesem Zweck ist es vorteilhaft, wenn an jeder Steuerbefehle erfordernden Funktionseinheit eine Tastatur für die Handsteuerung vorgesehen ist. Die einzelne Waffe kann so noch mit dieser Tastatur bedient werden, weil die für die spezielle Waffe charakteristischen Daten in dem ihr zugeordneten Datenverarbeitungsgerät in dezentralisierter Form vorhanden sind.

Eine weitere Ausführungsform ist so ausgebildet, daß zwischen bestimmten Funktionseinheiten mehrere Datenleitungen elektrisch parallel, jedoch räumlich getrennt verlegt sind. Hierdurch wird eine Redundanz geschaffen, so daß bei Zerstörung einer Datenleitung noch eine oder mehrere weitere Datenleitungen für die erforderliche Datenübertragung zur Verfügung stehen.

Die Ausführungsform nach Anspruch 3 gewährleistet es, daß die für die Weiterleitung der von der Navigationsanlage abgegebenen Signale verwendete einheitliche Datenleitung im Sinne einer Redundanz auch für den Datenaustausch zwischen den Funktionseinheiten verwendet werden kann, wenn dies z. B. durch Zerstörung der eigentlich für diesen Zweck vorgesehenen Datenleitungen erforderlich werden sollte.

Eine weitere Ausführungsform kennzeichnet sich dadurch, daß ein Landanschluß vorgesehen ist, über den einige oder alle Funktionsgruppen an einen externen Simulations-, Diagnose- und/oder Auswerterechner anschließbar sind.

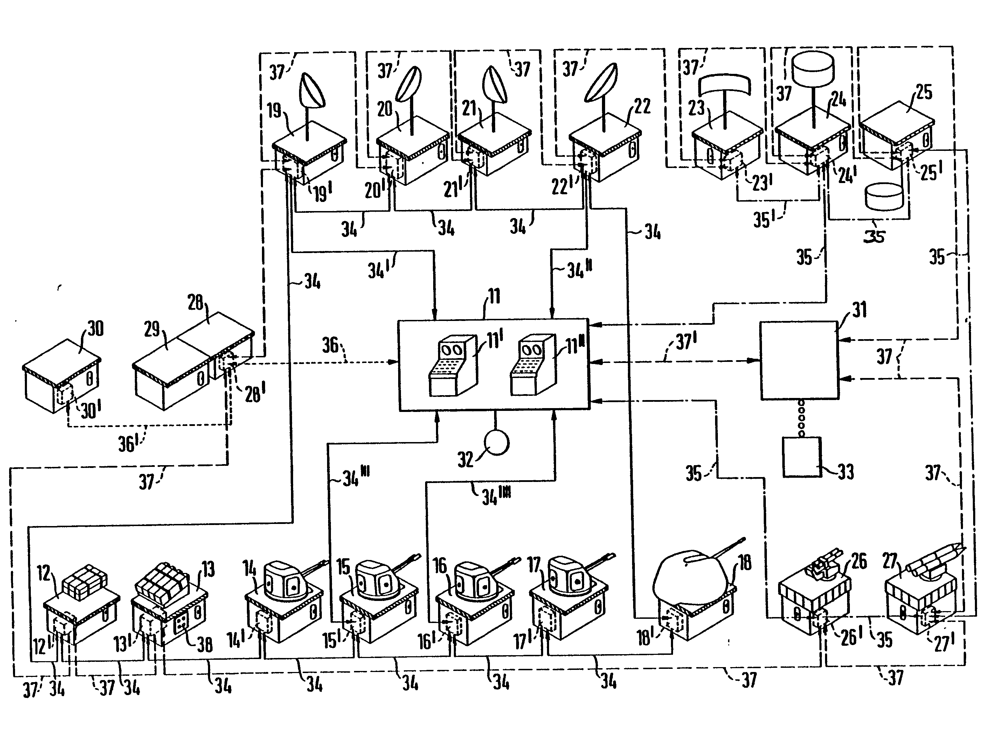

Die Erfindung wird im folgenden beispielsweise anhand der Zeichnung beschrieben, deren einzige Figur ein schematisches Blockschaltbild der in einem erfindungsgemäßen Kampfschiff enthaltenen Funktionseinheiten und Anlagen und der diese verbindenden einheitlichen Datenleitungen zeigt.

Nach der Zeichnung befindet sich im Schiff an zentraler Stelle, beispielsweise auf der Brücke eine Befehlsstellenanlage 11, in der zwei Datenverarbeitungsgeräte 11', 11'' vorgesehen sind. An der Befehlsstellenanlage 11 wird von einer oder mehreren Personen eingegeben, welches Ziel verfolgt und bekämpft werden soll. Die Befehlsstelle 11 empfängt von einer Navigationsanlage 31, welche Kompasse, ein Log, einen Windmesser, einen Deccanavigator, einen Omega-Navigator, einen Satelliten-Navigator etc. enthält, die für die Richtung des Schiffes gegen Nord repräsentativen Signale, ein Schiffsgeschwindigkeitssignal, ein Windgeschwindigkeitssignal etc. Auf entsprechenden Tochter-Anzeigegeräten in der Befehlsstellenanlage 11 können die entsprechenden Werte abgelesen werden.

Funktionseinheiten 12 bis 30, die jeweils einen Einheitscontainer aufweisen, der an seiner Oberseite mit einer Einheitsplattform abgeschlossen ist, über die die betreffende Funktionseinheit lösbar mit einem diese Einheit tragenden, nicht dargestellten Einheitsfundament des Schiffes verbunden ist, weisen folgende Anlagen auf:

die Funktionseinheit 12 in Form einer Raketenabschußanlage (ASPIDE),

die Funktionseinheit 13 in Form einer Raketenabschußanlage (OTOMAT),

die Funktionseinheit 14 in Form einer 40 mm Kanone,

die Funktionseinheit 15 in Form einer 40 mm Kanone,

die Funktionseinheit 16 in Form einer 40 mm Kanone,

die Funktionseinheit 17 in Form einer 40 mm Kanone,

die Funktionseinheit 18 in Form einer 127 mm Kompaktkanone,

die Funktionseinheit 19 in Form einer Feuerleitanlage (STIR),

die Funktionseinheit 20 in Form einer Feuerleitanlage (LIOD) (Steuerbord),

die Funktionseinheit 21 in Form einer Feuerleitanlage (LIOD) (Backbord),

die Funktionseinheit 22 in Form einer Feuerleitanlage (WM 25),

die Funktionseinheit 23 in Form einer Radaranlage (DA 08),

die Funktionseinheit 24 in Form einer Raketensteueranlage (ECM/ESM),

die Funktionseinheit 25 in Form einer Torpedosteuerungsanlage (SONAR),

die Funktionseinheit 26 in Form einer Unterwasser-Raketenabschußanlage,

die Funktionseinheit 27 in Form einer Torpedoabschußanlage,

Funktionseinheiten 28, 29 in Form einer Kommunikationsanlage,

die Funktionseinheit 30 in Form einer Fernmeldeanlage.

Ein Sensorsystem 33 nimmt die Schiffsmaschinendaten auf und liefert sie an die Navigationsanlage 31.

Mittels eines Landanschlusses 32 kann das gesamte System mit einem externen Simulations-, Diagnose- und/oder Auswerterechner verbunden werden, welcher nicht dargestellt ist.

In jeder Funktionseinheit 12 bis 30 ist ein individuelles Datenverarbeitungsgerät 12' bis 30' angeordnet, welches jeweils einen Speicher enthält, in dem alle für die zugehörige Anlage selbst spezifischen Daten abgelegt sind. Bei den Waffenanlagen aufweisenden Funktionseinheiten 12 bis 18 und 26, 27 kann es sich hierbei z. B. um den Vorhalt, die Ballistik, munitionsspezifische Daten, Beschränkungen für den Schußbereich der Waffen etc. handeln. Auf diese Weise braucht der einzelnen Waffenanlage lediglich noch eine relativ einfach zu übermittelnde Rohinformation zugeführt zu werden, welche im wesentlichen aus einem Richtungs- und Entfernungssignal besteht.

Um diese Datenübermittlung durchzuführen, sind die Überwasser-Waffenanlagen aufweisenden Funktionseinheiten 12, 13, 14, 15, 16, 17 und 18 mit den ihnen zugeordneten Feuerleitanlagen aufweisenden Funktionseinheiten 19, 20, 21, 22 als Funktionsgruppe zu einem Ringsystem zusammengefaßt, in dem jeweils die Datenverarbeitungsgeräte aufeinanderfolgender Anlagen durch in ausgezogenen Linien wiedergegebene, als einheitliche Datenleitungen ausgebildete Informationsübertragungsleitungen 34 miteinander verbunden sind. Bei dem dargestellten Ausführungsbeispiel sind also jeweils die Datenverarbeitungsgeräte 12', 13', 14', 15', 16', 17', 18', 22', 21', 20', 19', 12' durch je eine Informationsübertragungsleitung 34 miteinander verbunden. In dieses Ringleitungssystem könnte auch die Befehlsstellenanlage 11 einbezogen sein. Im vorliegenden Fall ist jedoch die Befehlsstellenanlage 11 über eine besondere, ebenfalls als einheitliche Datenleitung ausgebildete Informationsübertragungsleitung 34' mit dem Datenverarbeitungsgerät 19' der die Feuerleitanlage aufweisenden Funktionseinheit 19, über eine weitere, als einheitliche Datenleitung ausgebildete Informationsübertragungsleitung 34'' mit dem Datenverarbeitungsgerät 22' der die Feuerleitanlage aufweisenden Funktionseinheit 22, über eine weitere als einheitliche Datenleitung ausgebildete Informationsübertragungsleitung 34'''' mit dem Datenverarbeitungsgerät 15' der die Rohrwaffenanlage aufweisenden Funktionseinheit 15 und schließlich über eine vierte als einheitliche Datenleitung ausgebildete Informationsübertragungsleitung 34''''' mit dem Datenverarbeitungsgerät 16' der die Rohrwaffe aufweisenden Funktionseinheit 16 verbunden.

Über die Informationsübertragungsleitungen wird von der Befehlsstellenanlage 11 den Feuerleitanlagen aufweisenden Funktionseinheiten 19 bis 22 durch digitalisierte Signale mitgeteilt, welches Ziel verfolgt werden soll. Da über die Informationsübertragungsleitungen 34', 34'' adressierte Daten gesendet werden, können sich die Datenverarbeitungsgeräte 19', 20', 21', 22' die für sie bestimmten Signale aus der übertragenen Signalgesamtheit heraussuchen.

Durch über die Informationsübertragungsleitungen geschickte Steuersignale wird auch bestimmt, welche der Überwasser-Waffen aufweisenden Funktionseinheiten 12, 18 welcher der Feuerleitanlagen aufweisenden Funktionseinheiten 19, 20 zugeordnet wird.

Anschließend übermitteln dann die Datenverarbeitungsgeräte 19' bis 22' der Feuerleitanlagen aufweisenden Funktionseinheiten 19 bis 22 die erforderlichen Steuersignale an die Datenverarbeitungsgeräte 12' bis 18' der Überwasser-Waffen aufweisenden Funktionseinheiten 12 bis 18. Von jeder Feuerleitanlage aus gesehen stehen hierfür über die Informationsübertragungsleitungen 34 zwei Wege, und zwar in beiden Richtungen des Ringes, zur Verfügung, so daß bei irgendeiner Unterbrechung des Ringes z. B. durch ein Geschoßtreffer noch ein zweiter Weg für die Signalübertragung zur Verfügung steht. Durch die sternförmig angeordneten Informationsübertragungsleitungen 34' bis 34''''' wird außerdem noch eine erhebliche weitere Redundanz geschaffen.

Als Datenverarbeitungsgeräte eignen sich Mikroprozessoren für asynchrone Datenübertragung, Multiplexgeräte oder Paralleldatenübertragungsgeräte, wobei entweder klassische Kabel, Koaxialkabel oder Glasfaserkabel als Informationsübertragungsleitungen 34, 34', 34'', 34''' bzs. 34''''' verwendet werden können.

Aufgrund der Anordnung von Datenverarbeitungsgeräten sowohl in der zentralen Befehlsstellenanlage 11 als auch in jeder einzelnen Funktionseinheit bzw. an jeder einzelnen Anlage können unabhängig von der speziellen Art der einzelnen Anlage die von der Befehlsstellenanlage 11 zu den Funktionseinheiten oder zwischen den Funktionseinheiten zu übertragenden Informationen in eine solche Form gebracht werden, daß mit einem einzigen Netz von als einheitliche Datenleitungen ausgebildeten Informationsübertragungsleitungen 34, 34', 34'', 34''' bzw. 34''''' auszukommen ist. Das Netz von Informationsübertragungsleitungen braucht auch dann nicht verändert zu werden, wenn eine der Funktionseinheiten durch eine mit einer modernisierten oder neuen Anlage ausgestattete ersetzt wird.

Die Feuerleitanlagen aufweisenden Funktionseinheiten 19 bis 22 sind mit den Überwasser-Waffen aufweisenden Funktionseinheiten 12 bis 18 zu einer ersten Funktionsgruppe zusammengefaßt.

Die Feuerleitanlagen aufweisenden Funktionseinheiten 24, 25 und die Unterwasser-Waffenanlagen (Unterwasser-Raketenanlage und Torpedo-Abschußanlage) aufweisenden Funktionseinheiten 26, 27 sind zu einer zweiten Funktionsgruppe zusammengefaßt, deren als einheitliche Datenleitung ausgebildeten Informationsübertragungsleitungen 35 strichpunktiert wiedergegeben sind. Von der Befehlsstellenanlage 11 führt die ringförmig ausgebildete Informationsübertragungsleitung 35 über das Datenverarbeitungsgerät 24' der eine Feuerleitanlage aufweisenden Funktionseinheit 24 zum Datenverarbeitungsgerät 25', von dort zum Datenverarbeitungsgerät 27' der eine Torpedo-Abschußanlage aufweisenden Funktionseinheit 27, von dort zum Datenverarbeitungsgerät 26' der eine Unterwasserraketenabschußanlage aufweisenden Funktionseinheit 26 und von dort schließlich zurück zur Befehlsstellenanlage 11, so daß eine weitere, durch die Informationsübertragungsleitung 35 verbundene Funktionsgruppe mit den gleichen Vorteilen vorliegt, wie dies anhand des durch die ringförmige Informationsübertragungsleitung 34 gebildeten Funktionsgruppe oben beschrieben wurde.

Eine für alle Sensoren vorgesehene, eine Radaranlage aufweisende Funktionseinheit 23 ist mit dem in sie eingebauten Datenverarbeitungsgerät 23' über eine als einheitliche Datenleitung ausgebildete Informationsübertragungsleitung 35' mit dem Datenverarbeitungsgerät 24' der die Feuerleitanlage aufweisenden Funktionseinheit 24 verbunden.

Über die Informationsübertragungsleitungen 35, 35' werden zu den Waffenanlagen aufweisenden Funktionseinheiten 26, 27 Waffensteuerungsdaten in digitalisierter Form übertragen, wobei die Signale nur aus Rohinformationen bestehen, während alle für die Waffenanlagen aufweisenden Funktionseinheiten 26, 27 spezifischen Daten in den Speichern der Datenverarbeitungsgeräte 26', 27' abgelegt sind.

Eine dritte Funktionsgruppe wird durch Kommunikationsanlagen aufweisende Funktionseinheiten 28, 29 und die eine Fernmeldeanlage aufweisende Funktionseinheit 30 gebildet. Das Datenverarbeitungsgerät 28' der Funktionseinheit 28 und das Datenverarbeitungsgerät 30' der Funktionseinheit 30 sind über gepunktet dargestellte, als einheitliche Datenleitungen ausgebildete Informationsübertragungsleitungen 36, 36' mit der Befehlsstellenanlage 11 bzw. miteinander verbunden. Über die Informationsübertragungsleitungen 36, 36' werden Kommunikationsdaten wie Fernschreibdaten, Befehlsübermittlungsdaten innerhalb und außerhalb des Schiffes etc. übertragen.

Von besonderer Bedeutung auf einem Schiff ist die Navigationsanlage 31, welche in digitalisierter Form Kompaß-, Schiffsgeschwindigkeits-, Windgeschwindigkeits- usw. -Signale abgibt. Die von der Navigationsanlage 31 beschickten Funktionseinheiten bilden eine vierte Funktionsgruppe, welche durch gestrichelt dargestellte, als einheitliche Datenleitungen ausgebildete Informationsübertragungsleitungen 37 gebildet wird. In diese, von der Navigationsanlage 31 gespeiste ringförmige Informationsübertragungsleitung 37 sind all diejenigen Funktionseinheiten und in diesen angeordneten Datenverarbeitungsgeräte einbezogen, welche auf Signale bzw. Informationen aus der Navigationsanlage 31 angewiesen sind.

Es handelt sich hierbei in erster Linie um die Befehlsstellenanlage 11, um die Feuerleitanlagen aufweisenden Funktionseinheiten 19 bis 25, die Kommunikationsanlagen aufweisenden Funktionseinheiten 28, 29 sowie die Raketenwaffenanlagen aufweisenden Funktionseinheiten 12, 13, 26 und 27. Während sämtliche Informationen aus der Navigationsanlage 31 benötigenden Funktionseinheiten durch die Informationsübertragungsleitung 37 zu einem Ring zusammengefaßt sind, ist die Befehlsstellenanlage 11 durch eine separate, ebenfalls als einheitliche Datenleitung ausgebildete Informationsübertragungsleitung 37' mit der Navigationsanlage 31 verbunden.

Die Raketenwaffenanlagen aufweisenden Funktionseinheiten 12, 13, 26 bzw. 27 benötigen die Daten von der Navigationsanlage 31 als Referenz für den Raketenstart.

Die einzelnen Funktionsgruppen überlappen sich teilweise. So gehören beispielsweise die Waffenanlagen aufweisenden Funktionseinheiten 12, 13 und die Feuerleitanlagen aufweisenden Funktionseinheiten 19 bis 22 sowohl zu der durch die Informationsübertragungsleitung 34 gebildeten ersten Funktionsgruppe als auch zu der durch die Informationsübertragungsleitung 37 gebildeten vierten Funktionsgruppe.

Obwohl zwischen den Datenverarbeitungsgeräten benachbarter Funktionseinheiten (z. B. 19, 20) grundsätzlich nur eine Informationsübertragungsleitung erforderlich ist, ist die die im Beispiel der Funktionseinheit 19, 20 vorgesehene Anordnung von zwei Informationsübertragungsleitungen 34, 37 aufgrund der Zusammenfassung zu Funktionsgruppen bevorzugt, weil im Falle des Ausfalls eine der beiden Informationsübertragungsleitungen 34 oder 37 die andere, intaktbleibende Leitung die Datenübertragung übernehmen kann, was zwar nur mit einer geringeren Geschwindigkeit möglich ist, aber das gesamte System intakt läßt.

Die Datenverarbeitungsgeräte sind also so ausgebildet, daß beim Ausfall einer Informationsüberleitung die verbleibende Informationsübertragungsleitung bzw. die verbleibenden Informationsübertragungsleitungen die Informationsübertragung übernehmen.

Eine Redundanz kann außer durch sternförmig zusätzlich vorgesehene Informationsübertragungsleitungen auch durch Parallelschaltung mehrerer Informationsübertragungsleitungen erfolgen, welche zweckmäßigerweise räumlich an unterschiedlichen Stellen verlegt werden.

Am Einheitscontainer der eine Waffenanlage aufweisenden Funktionseinheit 13 ist eine Tastatur 38 angeordnet, welche auch an sämtlichen anderen Waffen tragenden Funktionseinheiten vorhanden sein kann und dazu dient, die Waffe beim Ausfall der Befehlsstellenanlage 11 und/oder der zugeordneten Feuerleitanlagen aufweisenden Funktionseinheiten von Hand zu bedienen. Dies ist deswegen möglich, weil in jeder Funktionseinheit ein eigenes Datenverarbeitungsgerät, und zwar im Beispiel der Funktionseinheit 13 das Datenverarbeitungsgerät 13' vorgesehen ist, welches die für die betreffende Funktionseinheit erforderlichen Korrekturen, Begrenzungen etc. vornimmt. Bei einem Ausfall der Befehlsstellenanlage kann also die Waffe noch von Hand weiterbedient werden.

Beispielsweise mit Hilfe von Steckkarten kann auch jede einzelne Funktionseinheit jederzeit getestet werden.

Außer den Steckerverbindungen für die als einheitliche Datenleitungen ausgebildeten Informationsübertragungsleitungen sind an den einzelnen Funktionseinheiten nur noch Steckkontakte für die Stromversorgung und gegebenenfalls eine Sprechverbindung vorgesehen.

Aufgrund der Anordnung von Datenverarbeitungsgeräten in jeder Funktionseinheit ist es gleichgültig, ob die in der Funktionseinheit vorgesehene Anlage analog oder digital arbeitet, weil in jedes Datenverarbeitungsgerät die u.U. erforderlichen Analog-Digitalwandler eingebaut werden können.

Die Informationsübertragungsleitung 35 für die Zuführung der Navigationssignale zu den einzelnen Funktionseinheiten ist deswegen vorteilhaft, weil bisher beispielsweise vom Kompaß des Schiffes zu den einzelnen Funktionseinheiten bis zu 80 Kabel verlegt werden mußten.

Wird eine Funktionseinheit durch eine neue oder modernisierte ersetzt, so müssen lediglich die Steckenerbindungen zu den alten Funktionseinheiten gelöst werden, worauf die alte Funktionseinheit herausgenommen und eine neue Funktionseinheit mit einer anderen Anlage eingesetzt wird. Diese weist die gleichen Anschlußkontakte und -buchsen wie die alte Funktionseinheit auf, so daß nach dem Einbau lediglich die Steckerverbindungen wieder angebracht werden müssen. Das gesamte System ist dann sofort wieder funktionsfähig. Irgendwelche Unterschiede der die neue Anlage aufweisenden Funktionseinheit gegenüber der die alte Anlage aufweisenden Funktionseinheit werden durch entsprechende Ausbildung des Datenverarbeitungsgerätes der neuen Funktionseinheit berücksichtigt.

**Patentansprüche**

1. Kampfschiff mit
- einer zentralen Befehlsstellenanlage (11), einer Navigationsanlage (31), einer Anzahl von im Schiffskörper vorgesehenen, jeweils eine Öffnung im Schiffsdeck umgebenden Einheitsfundamenten, einer entsprechenden Anzahl von auf den Einheitsfundamenten angeordneten Funktionseinheiten (12 bis 30), welche z. B. Waffen-, Feuerleit- und/oder Ortungsanlagen sowie eine Kommunikationsanlage umfassen und jeweils einen Einheitscontainer aufweisen, der einen Teil der Komponenten der betreffenden Funktionseinheit aufnimmt und an seiner Oberseite mit einer Einheitsplattform abgeschlossen ist, über die die betreffende Funktionseinheit lösbar mit dem diese Einheit tragenden Einheitsfundament verbunden ist und auf der die außerhalb des Einheitscontainers befindlichen Komponenten der Funktionseinheit angeordnet sind, Stromversorgungsleitungen zur Versorgung der genannten Anlagen sowie der Funktionseinheiten aus einem oder mehreren Generatoren,
- Informations-Übertragungsleitungen (34 bis 37, 34', 34'' 34''', 34'''', 35', 36', 37') zur Verbindung vorgegebener Funktionseinheiten miteinander sowie mit den genannten Anlagen, welche Leitungen über Steckerverbindungen an die Funktionseinheiten angeschlossen sind, dadurch gekennzeichnet, daß
- die Informations-Übertragungsleitungen unabhängig vom Typ der verbundenen Anlagen und Funktionseinheiten als einheitliche Datenleitungen ausgebildet sind,
- in jeder Funktionseinheit ein Datenverarbeitungsgerät (12' bis 27') vorgesehen ist, durch welches die in der Funktionseinheit erzeugten Daten in ein für die Übertragung auf die Datenleitungen geeignetes Format und die über diese Leitungen von den Funktionseinheiten empfangenen Daten in eine für die Weiterverarbeitung in diesen Einheiten geeignete Form umgesetzt werden,
- jedes Datenverarbeitungsgerät jeweils einen Speicher aufweist, in dem die für den Betrieb der betreffenden Funktionseinheit spezifischen Daten abgelegt sind, so daß sich die auf den Datenleitungen übertragenen Daten auf die nicht in den Speichern enthaltenen Daten beschränken,
- die Steckerverbindungen als Standardschnittstellen ausgebildet sind,
- Funktionsgruppen aus einander zugeordneten steuernden und gesteuerten Anlagen und Funktionseinheiten durch als Ringleitungen ausgebildete Datenleitungen miteinander verbunden sind.

2. Kampfschiff nach Anspruch 1, dadurch gekennzeichnet, daß an jeder Steuerbefehle erfordernden Funktionseinheit eine Tastatur (38) für die Handsteuerung vorgesehen ist.

3. Kampfschiff nach Anspruch 1 oder 2, dadurch gekennzeichnet, daß zwischen bestimmten Funktionseinheiten (12, 13, 19 bis 27) mehrere Datenleitungen (34, 35; 37) elektrisch parallel, jedoch räumlich getrennt verlegt sind.

4. Kampfschiff nach einem der vorhergehenden Ansprüche, dadurch gekennzeichnet, daß für die von der Navigationsanlage (31) abgegebenen Signale eine alle mit diesen Signalen versorgten Funktionseinheiten (12, 13, 19 bis 28) zu einem Ring zusammenschließende einheitliche Datenleitung (37) vorgesehen ist.

5. Kampfschiff nach einem der vorhergehenden Ansprüche, dadurch gekennzeichnet, daß ein Landanschluß (32) vorgesehen ist, über den einige oder alle Funktionsgruppen an einen externen Simulations-, Diagnose- und/oder Auswerterechner anschließbar sind.

**Claims**

1. A warship comprising
- a central command post system (11), a navigation system (31), a plurality of standardized foundations each surrounding an opening in the ships deck, a corresponding number of operating units (12 to 30) arranged on the standardized foundations which include for example weapons systems, fire control systems and/or position finding systems and also a communication system, and which each have a standardized container which receives a part of the components of the relevant operating unit and which is closed at the top side by a standardized platform by which the relevant operating unit is releasably connected with the standardized foundation carrying this unit and on which the components of the operating unit located outside of the standardized container are arranged, power supply lines for supplying the named units and also the operating units from one or more generators, and

- information transmission lines (34 to 37, 34', 34", 34"', 34"", 35', 36', 37') for connecting predetermined operating units with one another and also with the named systems, which lines are connected to the operating units by plug connections,

characterized in that

- the information transmission lines are formed independently of the type of connected systems and operating units as standardized data lines,

- a data processing apparatus (12' to 27') is provided in each operating unit through which the data generated in the operating unit is brought into a format suitable for transmission on the data lines and the data received via these lines from the operating units is converted into a form suitable for further processing in these units,

- each data processing apparatus has a respective memory in which the specific data for the operation of the relevant operating unit is stored, so that the data transferred via the data lines is restricted to data which is not contained in the memories,

- the plug connections are constructed as standard interfaces,

- functional groups consisting of associated controlling and controlled systems and operating units are connected together via data lines formed as ring lines.

2. A warship in accordance with claim 1, characterized in that a keyboard (38) for manual control is provided at each operating unit requiring control commands.

3. A warship in accordance with claim 1 or claim 2, characterized in that several data lines (34, 35; 37) are laid electrically in parallel however spatially separated from one another between specific operating units (12, 13, 19 to 27).

4. A warship in accordance with one of the preceding claims, characterized in that for the signals transmitted by the navigation system (31) a unitary data line (37) is provided which connects all the operating units (12, 13, 19 to 28) supplied with these signals to a ring.

5. A warship in accordance with one of the preceding claims, characterized in that a land terminal (32) is provided by which some or all the functional groups can be connected to an external simulation, diagnosis and/or evaluation computer.

**Revendications**

1. Navire de guerre comprenant

- un poste central de commandement (11), une installation de navigation (31), un certain nombre de fondations de groupes unitaires prévues dans la coque du navire et entourant respectivement un orifice pratiqué dans le pont du navire, un nombre correspondant d'unités fonctionnelles (12 à 30) qui sont implantées sur lesdites fondations, qui englobent par exemple des installations d'armement, de conduite de tir et/ou de localisation ainsi qu'une installation de communication, et qui présentent chacune un conteneur logeant une partie des éléments constitutifs de l'unité fonctionnelle considérée et obturé, à sa face supérieure, par une plateforme par l'intermédiaire de laquelle l'unité fonctionnelle considérée est reliée de manière démontable à la fondation portant cette unité, et sur laquelle se trouvent les éléments constitutifs de l'unité fonctionnelle relégués à l'extérieur du conteneur, des conducteurs d'alimentation en courant pour alimenter les installations précitées ainsi que les unités fonctionnelles, à partir d'un ou de plusieurs générateurs,

- des conducteurs (34 à 37, 34', 34", 34"', 34"", 35', 36', 37') transmetteurs d'informations, destinés à relier des unités fonctionnelles prédéterminées les unes aux autres ainsi qu'aux installations précitées, lesdits conducteurs étant raccordés aux unités fonctionnelles par l'intermédiaire de jonctions enfichables, caractérisé par le fait

- que les conducteurs transmetteurs d'informations sont réalisés sous la forme de lignes unitaires de transmission de données, indépendamment du type des installations et unités fonctionnelles raccordées,

- qu'un appareil (12' à 27') de traitement de données est prévu dans chaque unité fonctionnelle, appareil par l'intermédiaire duquel les données engendrées dans l'unité fonctionnelle sont converties en un format approprié pour la transmission aux lignes de transmission de données, et les données reçues par les unités fonctionnelles par l'intermédiaire de ces lignes sont converties en une forme appropriée pour le traitement ultérieur dans ces unités,

- que chaque appareil de traitement de données présente une mémoire respective dans laquelle sont emmagasinées les données spécifiques de l'exploitation de l'unité fonctionnelle considérée, de telle sorte que les données transmises sur les lignes de transmission de données se limitent aux données non renfermées par les mémoires,

- que les jonctions enfichables sont réalisées en tant que jonctions d'interfaces normalisées,

- que des groupes fonctionnels, constitués par des installations et unités fonctionnelles de commande et commandées, associées les unes aux autres, sont raccordés mutuellement par l'intermédiaire de lignes de transmission de données réalisées sous la forme de lignes en boucle.

2. Navire de guerre selon la revendication 1, caractérisé par le fait qu'un clavier (38) est prévu, pour la commande manuelle, sur chaque unité fonctionnelle exigeant des instructions de commande.

3. Navire de guerre selon la revendication 1 ou 2, caractérisé par le fait que plusieurs lignes de trnasmission de données (34, 35; 37) sont branchées électriquement en parallèle, mais

**0 097 192**

posées avec séparation dans l'espace entre des unités fonctionnelles déterminées (12, 13, 19 à 27).

4. Navire de guerre selon l'une des revendications précédentes, caractérisé par le fait qu'il est prévu, pour les signaux délivrés par l'installation de navigation (31), une ligne unitaire de données (37) qui rassemble, en une boucle, toutes les installations fonctionnelles (12, 13, 19 à 28) alimentées par ces signaux.

5. Navire de guerre selon l'une des revendications précédentes, caractérisé par le fait qu'il est prévu un raccord terrestre (32), par l'intermédiaire duquel quelques-uns ou tous les groupes fonctionnels peuvent être raccordés à un calculateur extérieur de simulation, de diagnostic et/ou d'interprétation.